# EUROPÄISCHE PATENTSCHRIFT

(11) **EP 2 334 742 B1**
(45) Veröffentlichungstag und Bekanntmachung des Hinweises auf die Patenterteilung: **14.08.2013**
(21) Anmeldenummer: 09778503.4
(22) Anmeldetag: 14.09.2009
(51) Int. Cl.: C09D 175/00

(54) **HÄRTENDE ZUSAMMENSETZUNGEN ZUR BESCHICHTUNG VON VERBUNDWERKSTOFFEN**
CURING COMPOSITIONS FOR COATING COMPOSITE MATERIALS
COMPOSITIONS DURCISSANTES POUR REVÊTEMENT DE MATÉRIAUX COMPOSITES

(30) Priorität: 15.09.2008 DE 102008047359
(43) Veröffentlichungstag der Anmeldung: 22.06.2011
(73) Patentinhaber: BASF Coatings GmbH, 48165 Münster (DE)
(72) Erfinder: DORNBUSCH, Michael, 40599 Düsseldorf (DE); NARJES, Hendrik, 48163 Münster (DE); AUSTERMANN, Doris, 48317 Drensteinfurt (DE)
(74) Vertreter: Leifert & Steffan
(86) Internationale Anmeldenummer: PCT/EP2009/006628
(87) Internationale Veröffentlichungsnummer: WO 2010/028848

(56) Entgegenhaltungen:
- WO-A-01/05895
- WO-A-01/27211
- WO-A-02/02704
- WO-A-2005/010107
- WO-A-2006/084523
- WO-A-2007/005808
- WO-A-2008/085550
- WO-A-2009/043743
- DE-A1- 10 106 567
- DE-A1-102005 010 964
- DE-A1-102005 032 346
- DE-A1-102007 001 653
- FR-A- 2 874 927
- US-A- 4 155 896

## Beschreibung

Die vorliegende Erfindung betrifft die Verwendung von bei unter 40 °C härtbaren Zusammensetzungen, ein Verfahren zur Beschichtung von Faser-Kunststoff-Verbunden, beschichtete Faser-Kunststoff-Verbunde, härtbare Zusammensetzung und ihre Herstellung, Lackierungen und Mehrschichtlackierungen, die diese Zusammensetzungen enthalten, sowie ein Modulsystem zur Herstellung dieser Zusammensetzungen.

Ein Verbundwerkstoff ist ein Werkstoff aus zwei oder mehr verbundenen Materialien. Zu ihnen zählen die Faser-Kunststoff-Verbunde (FKV), auch Faserverbundkunststoff oder faserverstärkter Kunststoff genannt, die aus Verstärkungsfasern und einer Matrix aus Kunststoff bestehen. Als Verstärkungsfasern können beispielsweise Kohlenstoff-, Glas- oder Aramidfasern dienen. Entsprechend werden die Faser-Kunststoff-Verbunde kohlenstofffaserverstärke Kunststoffe (CFK), glasfaserverstärkte Kunststoffe (GFK) und aramidfaserverstärkte Kunststoffe (AFK) genannt.

Im Flugzeug- und Raumfahrtbau wird Leichtmetall wie Aluminium mehr und mehr durch derartige Faser-Kunststoff-Verbunde ersetzt. Der Vorteil dieser Materialien liegt in ihrem gegenüber Leichtmetall und Stahl verhältnismäßig geringerem Gewicht sowie ihrer hohen spezifischen Festigkeit und Steifigkeit.

Die Anforderungen an Flugzeuglackierungen sind besonders hoch. So ist der Anspruch an die Sicherheit viel höher als z. B. im Automobilbereich. Zudem sollen sie das Substrat über mehrere Jahrzehnte schützen, häufig wechselnde Umgebungsbedingungen wie beispielsweise extreme Druck- und Temperaturschwankungen sowie erhöhte UV-Belastungen bewältigen und ästhetische Bedürfnisse, wie hohen Glanz und guten Verlauf, befriedigen. Die Außenhaut kommt dabei mit diversen Betriebs- und Hilfsstoffen wie Kerosin oder Ölen, aber auch mit Enteisungsmitteln in Kontakt, die durch die Lackierung entsprechend zu schützen ist. Weiterhin sollten die Beschichtungen gut auf dem Substrat haften. Vor allem bei Faser-Kunststoff-Verbunden (FKV), welche einen hohen elektrischen Widerstand aufweisen, werden zudem weitere Anforderungen an die Oberfläche gestellt, um verbesserte Ableitung überschüssiger elektrischer Ladungen, beispielsweise zur Energieverteilung nach einem Blitzeinschlag, zu erreichen. Demnach sollte eine auf FKV aufgebrachte Flugzeuglackierung zumindest eine Beschichtung aufzuweisen, die den Widerstand der Oberfläche verringert und eine elektrostatische Ableitung ermöglicht. Diese Funktion kann beispielsweise durch eine Antistatikbeschichtung erhalten werden.

Im Flugzeugbau existieren nationale und internationale Mindeststandards für die Lackierungen. Der Oberflächenwiderstand beispielsweise sollte üblicherweise einen Wert von etwa 10⁶ Ohm aufweisen.

Der Oberflächenwiderstand (auch Ableitwiderstand genannt) gibt Aufschluss über den an der Oberfläche einer Beschichtung herrschenden Isolationszustand bzw. die Neigung des Nichtleiters, eine leitende Oberflächenschicht zu bilden. Der Oberflächenwiderstand kann durch äußere Einflüsse wie Feuchtigkeit, Säure usw. verändert werden . Seine Bestimmung kann beispielsweise mit Hilfe einer Zungenelektrode erfolgen (Römpp Lexikon Lacke und Farben, Georg Thieme Verlag Stuttgart 1998, ISBN 3-13-776001-1, Stichwort Oberflächenwiderstand).

Im Flugzeugbau wird ein Metall-Substrat üblicherweise vorbehandelt, um Verunreinigungen vollständig zu entfernen. FKV hingegen werden üblicherweise nicht vorbehandelt. Vor allem wird auf eine chemische Vorbehandlung, beispielsweise mit organischen Lösemitteln, verzichtet, um ein Aufquellen des Materials zu unterbinden. In Frage kämen lediglich physikalische Methoden wie beispielsweise Corona-Entladung. Vielmehr werden FKV mit einem In-Mold-Primer beschichtet, um dann mit einem Füller als Grundbeschichtung versehen zu werden. Danach wird eine Decklackierung aufgetragen. Die Decklackierung umfasst dabei Basis- und Klarlack. Je nach Anforderung und Kundenwunsch kann auch auf den In-Mold-Primer und Teile der Decklackierung verzichtet werden. Im Flugzeugneubau werden bereits die Einzelteile häufig teillackiert. Nach der Endmontage erfolgen zunächst Testflüge, bevor die Endlackierung, meist ein Decklack, aufgebracht wird. Die Lackierung - sowohl im Flugzeugneubau als auch in der Instandsetzung - kann auf Grund der Substrateigenschaften nicht thermisch gehärtet werden. Die Schmelz- bzw. Glasübergangstemperaturen können bereits in Bereichen von etwa 70 °C liegen. Ebenso ist auf Grund der Dimensionen eines endmontierten Flugzeugs oder deren Einzelteile keine thermische Härtung möglich.

Aus der US 4,155,896 ist eine antistatische, nicht-wässrige Beschichtungszusammensetzung für Flugzeuge offenbart. Diese Zusammensetzung eignet sich für die Beschichtung von Aluminiumsubstraten.

Die WO2008/08555 beschreibt elektrisch ableitende Beschichtungszusammensetzungen für Flugzeuge, die auf kommerziellen Füllern aufgetragen werden, die die Bildung von Eisschichten unterbinden.

In der Patentanmeldung DE19948821 werden elektrisch leitfähige Hydroprimer für Kunststoffe, unter anderem faserverstärkte Kunststoffe, beschrieben. Diese Kunststoffe finden jedoch nicht im Flugzeugbau oder der Raumfahrt Anwendung.

Inzwischen wird jedoch mehr und mehr angestrebt, den Anteil an Lösemitteln zu verringern und wasserbasierte Lacksysteme bereitzustellen.

Der vorliegenden Erfindung lag die Aufgabe zugrunde, die zuvor beschriebenen Anforderungen an einen Füller für den Flugzeug- und Raumfahrtbereich erfüllen. Es sollte eine Zusammensetzung auf Wasserbasis zur Verfügung gestellt werden, die als Füller die hohen Anforderungen an eine Flugzeuglackierung erfüllen und gleichzeitig als Antistatikbeschichtung dienen kann. Die Zusammensetzung sollte bei Temperaturen von unter 40 °C härten und sie sollte eine gute Haftung auf sowohl Faser-Kunststoff-Verbunden direkt als auch auf mit In-Mold-Primern beschichteten Faser-Kunststoff-Verbunden aufweisen. Zudem sollte der Füller einen guten Verlauf zeigen und in einer hohen Schichtdicke applizierbar sein.

Überraschenderweise wurde eine Verwendung von unter 40 °C härtenden Zusammensetzungen als Füller zur Beschichtung von Faser-Kunststoff-Verbunden gefunden ("erfindungsgemäß zu verwendende Zusammensetzungen"). Demgemäß wurde die Verwendung von unter 40 °C härtende Zusammensetzungen als Füller zur Beschichtung von Faser-Kunststoff-Verbunden gefunden, die
a. 1 - 50 Massen-% mindestens eines hydroxyfunktionellen Bindemittels, ausgewählt aus der Gruppe bestehend aus Poly(meth)acrylaten, Polyestern und Polyurethanen,
b.
   i. 0,01 - 25 Massen-% mindestens eines elektrisch leitfähigen Pigments, ausgewählt aus der Gruppe bestehend aus leitfähigen Rußen, Graphen, Fullerenen, leitfähigem Bariumsulfat, dotierten Perlglanzpigmenten und Metallpigmenten,
      oder
   ii. 0,001 - 5 Massen-% mindestens eines elektrisch leitfähigen Pigments, ausgewählt aus Nanopartikeln und leitfähigen Polymeren,
c. 5 - 80 Massen% mindestens eines nicht-leitfähigen Pigments,
d. 0,001 - 25 Massen-% mindestens einer Verbindung, die ausgewählt ist aus der Gruppe bestehend aus Polyethern, Oligoethern, Polysiloxanen und aliphatischen Ethinolen, als Verlaufmittel,
e. 0,05 - 20 Massen-% mindestens eines unblockierten Isocyanats und
f. 10 - 60 Massen-% Wasser,
g. 0 - 20 Massen% organische Lösemittel,
wobei sich die Massen-%-Angaben auf die Gesamtmasse der Zusammensetzung beziehen,
enthalten.

Besonders überraschend hierbei war, dass mindestens ein elektrisch leitfähiges Pigment und mindestens ein nicht-leitfähiges Pigment enthalten sein muss.

Die Komponenten a bis g sind jeweils verschieden voneinander.

Bei der erfindungsgemäß zu verwendenden Zusammensetzung handelt es sich um einen Zweikomponenten-Lack. Zweikomponenten-Lacke sind Beschichtungsstoffe, bei denen die chemische Reaktion, die zur Härtung führt, durch Mischen von zwei Komponenten (Stammlack und Härter) eingeleitet wird. Stammlacke sind Komponenten in Zweikomponenten-Lacken, die Bestandteile ohne Härter enthalten (Römpp Lexikon Lacke und Farben, Georg Thieme Verlag Stuttgart 1998, ISBN 3-13-776001-1, Stichworte Zweikomponenten-Lacke, Stammlack).

Vorteilhaft sind erfindungsgemäß zu verwendende Zusammensetzungen, die unter 35 °C, bevorzugt unter 30 °C, ganz besonders bevorzugt unter 25 °C und insbesondere bei 18 bis 23 °C härten. Ebenso können diese Zusammensetzungen zusätzlich mit aktinischer Strahlung gehärtet werden. Unter aktinischer Strahlung ist elektromagnetische Strahlung wie nahes Infrarot (NIR), sichtbares Licht, UV-Strahlung und Röntgenstrahlung, insbesondere UV-Strahlung, oder Korpuskularstrahlung, wie Elektronenstrahlung, zu verstehen.

Die Trockenschichtdicke der erfindungsgemäß zu verwendenden Zusammensetzungen beträgt vorteilhafterweise 40 bis 120 µm. Typischerweise liegt die Trockenschichtdicke bei 40 bis 80 µm, wie beispielsweise bei 50 bis 70 µm. Die erfindungsgemäß zu verwendenden Zusammensetzungen können aber auch mit höheren Trockenschichtdicken von bis zu 100 oder 120 µm appliziert werden.

Vorzugsweise dient die verwendete Zusammensetzung gleichzeitig als Antistatikbeschichtung der FKV.

Die erfindungsgemäß verwendete Zusammensetzung weist vorzugsweise einen Oberflächenwiderstand von 10² bis 10⁸ Ohm, bevorzugt von 10⁴ bis 10⁷ Ohm und ganz besonders bevorzugt von 10⁵ bis 5·10⁶ Ohm auf.

Zur Messung des Oberflächenwiderstands werden auf der Oberfläche eines Festkörpers (der Probenkörper) zwei Elektroden angebracht, an die eine Spannung angelegt wird. Aus dem Strom, der nun entlang der Oberfläche fließt, wird der Oberflächenwiderstand berechnet. Der Oberflächenwiderstand kann beispielsweise mit dem Hochohm-Messgerät HM 307D mit Faraday-Käfig sowie Kreisring-Elektroden von der Firma Fetronic GmbH, Langenfeld, Deutschland, gemessen werden.

Die mit der erfindungsgemäß verwendeten Zusammensetzung beschichteten FKV werden vorzugsweise im Flugzeug- und/oder Raumfahrtbau eingesetzt. Bevorzugte FKV sind kohlenstofffaserverstärke Kunststoffe (CFK), glasfaserverstärkte Kunststoffe (GFK) und aramidfaserverstärkte Kunststoffe (AFK). Besonders bevorzugt sind kohlenstofffaserverstärke Kunststoffe. Vorteilhafterweise werden die kohlenstofffaserverstärkten Kunststoffe hergestellt aus Kunststofffasern und einer Matrix, die Epoxid-Harze enthält.

Die erfindungsgemäß zu verwendende Zusammensetzung enthält 1-50 Massen-%, bezogen auf die Gesamtmasse der Zusammensetzung, mindestens eines hydroxyfunktionellen Bindemittels. Dieses ist ausgewählt aus der Gruppe der Poly(meth)acrylate, der Polyester und der Polyurethane. Vorzugsweise wird mindestens ein hydroxyfunktionelles Poly(meth)acrylat und mindestens ein Polyester oder mindestens ein Polyurethan eingesetzt. Aufgrund der Hydroxyfunktionalität der Bindemittel sind diese frei von Isocyanatgruppen.

Vorzugsweise enthält die erfindungsgemäß zu verwendende Zusammensetzung 5-25 Massen-%, besonders bevorzugt 10-20 Massen-% hydroxyfunktionelle Bindemittel.

Als Poly(meth)acrylate werden sowohl Polyacrylate als auch Polymethacrylate verstanden.

Geeignete hydroxyfunktionelle Poly(meth)acrylate, hydroxyfunktionelle Polyester und hydroxyfunktionelle Polyurethane für Beschichtungen, die über unblockierte Polyisocyanate härten, sind dem Fachmann bekannt. Diese werden beispielsweise in den Patentanmeldungen DE 19644615, WO2005/1106 und DE 19948821 genannt werden.

Die Bindemittel können radikalisch vernetzbare Komponenten aufweisen, die eine zusätzliche aktinische Härtung ermöglichen. Beispielsweise seien C=C-Doppelbindungen als funktionelle Gruppen in den Bindemitteln genannt. Vorzugsweise sind die hydroxyfunktionellen Bindemittel frei von aktinisch härtbaren Gruppen.

Darüber hinaus kann die erfindungsgemäß zu verwendende Zusammensetzung weitere Bindemittel enthalten. Diese Bindemittel können hydroxyfunktionell oder nicht hydroxyfunktionell sein.

Das Bindemittel bzw. Bindemittelgemisch weist in der Summe vorteilhafterweise eine rechnerisch bestimmte OH-Zahl von 0,1 bis 50 mg KOH / g auf. Besonders vorteilhaft sind OH-Zahlen im Bereich von 0,1 bis 20 mg KOH / g, ganz besonders vorteilhaft 0,4 bis 10 mg KOH / g. Die rechnerisch bestimmte OH-Zahl des oder der Bindemittel wird aus der Monomeren-Zusammensetzung kalkuliert.

Ein weiterer wesentliche Bestandteil der erfindungsgemäß zu verwendenden Zusammensetzung ist mindestens ein elektrisch leitfähiges Pigment, welches aus der Gruppe bestehend aus leitfähigen Rußen, Graphen, Fullerenen, leitfähigem Bariumsulfat, dotierten Perlglanzpigmenten, Metallpigmenten, Nanopartikeln und leitfähigen Polymeren ausgewählt ist. Bevorzugt sind leitfähige Ruße, leitfähiges Bariumsulfat, dotierte Perlglanzpigmente und Metallpigmente. Besonders bevorzugt sind leitfähige Ruße. Beispielsweise eignet sich Ketjenblack® der Firma Akzo Nobel.

Leitfähige Ruße, leitfähiges Bariumsulfat, dotierte Perlglanzpigmente und Metallpigmente sind beispielsweise im Römpp Lexikon Lacke und Druckfarben, Georg Thieme Verlag Stuttgart 1998, ISBN 3-13-776001-1, Stichwort "Leitfähige Pigmente", sowie in den Patentschriften EP1600484, EP1647583 und DE-A-19948821 beschrieben.

Geeignete Nanopartikel sind beispielsweise Kohlenstoff-Nano-Röhrchen, wie sie in der EP1756668 beschrieben werden.

Als leitfähige Polymere eignen sich beispielsweise Polypyrrole, wie sie in der JP2005154632 offenbart werden, Polyaniline aus der EP1756668 und kationische Polymere aus der US4011176.

Vorteilhafterweise weist der Ruß eine Korngröße, auch Mahlfeinheit genannt, von 20 µm oder weniger auf. Besonders vorteilhaft ist eine Korngröße von 10 µm oder weniger.

Die Korngröße wird mittels eines Grindometers nach Hegman Modell 232 der Firma Erichsen GmbH & Co. KG, Hemer, Deutschland bestimmt. Dabei wird ein flüssiger Keil der Testsubstanz auf dem Gerät erzeugt. Als Testsubstanz dient eine Paste, die das Ruß sowie mindestens ein Bindemittel und Wasser enthält. Wenn die Kornmessungen größer sind als die lokale Keildicke, ist dies visuell erkennbar. Auf der Grenze zwischen gestörter und glatter Flüssigkeitsoberfläche wird die zugehörige Keildicke abgelesen, welche der Korngröße entspricht.

Die Durchführung der Messung erfolgt so, dass an den tiefsten Stellen der Rinnen des Grindometers eine ausreichende Menge der Probe ohne Lufteinschlüsse eingefüllt wird. Danach wir das Material innerhalb von ein bis zwei Sekunden stetig zum flachen Ende hinaufgezogen. Dabei wird ein Haarlineal sowohl senkrecht zur Oberfläche des Prüfwerts als auch senkrecht zu den Rinnen gehalten. Die Auswertung muss innerhalb von 3 s nach dem Ausstreichen der Probe erfolgen: Hierzu wird die Probenoberfläche rechtwinklig zu den Rinnen unter flachem Winkel (20° - 30°) gegen eine Lichtquelle begutachtet. Es wird die Stelle ermittelt, von der an gehäufte Teilchen bzw. deren Kratzspuren sichtbar sind. Als Korngröße ist die zugeordnete Rinnentiefe an dieser Stelle definiert.

Der Gehalt an elektrisch leitfähigen Pigmenten kann sehr breit variieren und liegt bei 0,01 - 25 Massen-%, bezogen auf die Gesamtmasse der Zusammensetzung, an leitfähigen Rußen, Graphen, Fullerenen, leitfähigem Bariumsulfat, dotierten Perlglanzpigmenten und Metallpigmenten. Vorzugsweise liegt ihr Anteil bei 0,01 bis 5 Massen-%.

Der Gehalt an Nanopartikeln und leitfähigen Polymeren liegt, bezogen auf die Gesamtmasse der Zusammensetzung, bei 0,001 - 5 Massen-%. Vorzugsweise liegt der Gehalt bei 0,005 bis 1 Massen-%.

Die Pigmente können auch über Pigmentpasten in die erfindungsgemäß zu verwendende Zusammensetzung eingearbeitet werden.

Darüber hinaus enthält die erfindungsgemäß zu verwendende Zusammensetzung 5 - 80 Massen%, bezogen auf die Gesamtmasse der Zusammensetzung, mindestens eines nicht-leitfähigen Pigments. Beispiele geeigneter Pigmente sind Rutil (Titandioxid), Kalk, Siliciumdioxid, Talkum und Kieselsäure. Vorteilhafterweise wird Rutil als nicht-leitfähiges Pigment eingesetzt. Das Rutil weist vorzugsweise eine Partikelgröße von weniger als 40 µm, bevorzugt weniger als 35 µm und besonders bevorzugt von weniger als 30 µm auf. Die Partikelgröße wird mittels eines Siebgewebes ermittelt. Dabei wird das nicht-leitfähige Pigment auf ein Siebgewebe bestimmter Größe gegeben. Die ausgesiebte Fraktion weist eine Partikelgröße auf, die gleich oder kleiner ist als die Maschenweite des Siebs.

Weitere nicht-leitfähige Pigmente sind beispielsweise organische oder anorganische Pigmente, sowie Füllstoffe wie Calciumsulfat, nicht-leitfähiges Bariumsulfat, Silikate wie Talk, Bentonit oder Kaolin, Kleselsäuren, Oxide wie Aluminiumhydroxid oder Magnesiumhydroxid, organische Füllstoffe wie Textilfasern, Cellulosefasern, Polyethylenfasern oder Holzmehl, Eisenoxid, Zinkphosphat oder Bleisilikat.

Vorzugsweise enthält die erfindungsgemäß zu verwendende Zusammensetzung 10 bis 50 Massen% nicht-leitfähige Pigmente.

In einer bevorzugten Ausführungsform der Erfindung sind mindestens ein Ruß als elektrisch leitfähiges Pigment und mindestens Rutil als nicht-leitfähiges Pigment enthalten.

Die erfindungsgemäß zu verwendende Zusammensetzung enthält weiterhin mindestens eine Verbindung, die ausgewählt ist aus der Gruppe bestehend aus Polyethern, Oligoethern, Polysiloxanen und aliphatischen Ethinolen, als Verlaufmittel. Verlaufmittel sind Substanzen, die durch Erniedrigung der Viskosität und/oder der Oberflächenspannung Nasslacken zu eben verlaufenden Filmen verhelfen (Römpp Lexikon Lacke und Druckfarben, Georg Thieme Verlag Stuttgart 1998, ISBN 3-13-776001-1, Stichwort "Verlauf(hilfs)mittel"). Besonders bevorzugt sind Polysiloxane. Die Zusammensetzung enthält 0,001 - 25 Massen-% der genannten Verlaufmittel, bezogen auf die Gesamtmasse der Zusammensetzung. Vorzugsweise sind 0,001 - 25 Massen-%, bevorzugt 0,001 - 5 Massen-% enthalten.

In der erfindungsgemäß zu verwendenden Zusammensetzung sind weiterhin 0,05 - 20 Massen-%, bezogen auf die Gesamtmasse der Zusammensetzung, mindestens eines unblockierten Polyisocyanats enthalten. Diese unblockierten Polyisocyanate fungieren als Härter. Härter sind diejenigen Komponenten in einem Zweikomponenten-Lack, die nach dem Vermischen mit dem Stammlack eine chemische Vernetzung bewirken (Römpp Lexikon Lacke und Farben, Georg Thieme Verlag Stuttgart 1998, ISBN 3-13-776001-1, Stichwort Härter).

Als unblockierte Polyisocyanate werden solche Polyisocyanate verstanden, die mindestens zwei freie NCO-Gruppen enthalten. Vorzugsweise sind unblockierte Polyisocyanate frei von blockierten NCO-Gruppen.

Als unblockierte Polyisocyanate kommen grundsätzlich alle der üblichen und bekannten, auf dem Lackgebiet verwendeten aliphatischen, cycloaliphatischen, aliphatisch-cycloaliphatischen, aromatischen, aliphatisch-aromatischen und/oder cycloaliphatisch-aromatischen Polyisocyanate und Polyisocyanataddukte in Betracht, welche auch als Lackpolyisocyanate bezeichnet werden. Besonders gut geeignete Polyisocyanate sind neben Diisocyanaten insbesondere Oligomere und/oder Polymere aus Diisocyanaten.

Als Oligomere und Polymere können höherfunktionelle Polyisocyanate mit einer statistischen mittleren Funktionalität von 2,5 bis 6, insbesondere 2,5 bis 5, verwendet werden.

Beispiele geeigneter höherfunktioneller Polyisocyanate sind isocyanatgruppenhaltige Polyurethanpräpolymere, die durch Reaktion von Polyolen mit einem Überschuss an Diisocyanaten hergestellt werden können und bevorzugt niederviskos sind. Es können auch Isocyanurat-, Biuret-, Allophanat-, Iminooxadiazindion-, Urethan-, Harnstoff-, Carbodiimid und/oder Uretdiongruppen aufweisende Polyisocyanate verwendet werden. Urethangruppen aufweisende Polyisocyanate werden beispielsweise durch Umsetzung eines Teils der Isocyanatgruppen mit Polyolen, wie z. B. Trimethylolpropan und Glycerin, erhalten. Vorzugsweise werden die nachstehend im Detail beschriebenen Diisocyanate oder deren Oligomere oder Polymere verwendet.

Ganz besonders bevorzugt werden Gemische aus Uretdion- und/oder Isocyanuratgruppen und/oder Allophanatgruppen aufweisenden Polyisocyanataddukten auf Basis von Hexamethylendiisocyanat, wie sie durch katalytische Oligomerisierung von Hexamethylendiisocyanat unter Verwendung von geeigneten Katalysatoren entstehen, und auf der Basis von Isophorondiisocyanat eingesetzt.

Beispiele geeigneter Diisocyanate sind Isophorondiisocyanat (IPDI; = 5-Isocyanato-1-isocyanatomethyl-1,3,3-trimethyl-cyclohexan), 5-Isocyanato-1-(2-isocyanatoeth-1-yl)-1,3,3-trimethyl-cyclohexan, 5-Isocyanato-1-(3-isocyanatoprop-1-yl)-1,3,3-trimethyl-cyclohexan, 5-Isocyanato-(4-isocyanatobut-1-yl)-1,3,3-trimethyl-cyclohexan, 1-Isocyanato-2-(3-isocyanatoprop-1-yl)-cyclohexan, 1-Isocyanato-2-(3-isocyanatoeth-1-yl)cyclohexan, 1-Isocyanato-2-(4-isocyanatobut-1-yl)-cyclohexan, 1,2-Diisocyanatocyclobutan, 1,3-Diisocyanatocyclobutan, 1,2-Diisocyanatocyclopentan, 1,3-Diisocyanatocyclopentan, 1,2-Diisocyanatocyclohexan, - 1,3-Diisocyanatocyclohexan, 1,4-Diisocyanatocyclohexan, Dicyclohexylmethan-2,4'-diisocyanat, Dicyclohexylmethan-4,4'-diisocyanat, flüssiges Dicyclohexylmethan-4,4'-diisocyanat eines trans/trans-Gehalts von bis zu 30 Massen-%, vorzugsweise 25 Massen-% und insbesondere 20 Massen-%, das durch Phosgenierung von Isomerengemischen des Bis(4-aminocyclohexyl)methans oder durch fraktionierte Kristallisation von handelsüblichem Bis(4-isocyanatocyclohexyl)methan gemäß den Patentschriften DE-A-4414032, GB-A-1220717, DE-A-1618795 oder DE-A-1793785 erhältlich ist; Trimethylendiisocyanat, Tetramethylendiisocyanat, Pentamethylendiisocyanat, Hexamethylendiisocyanat (HDI), Ethylethylendiisocyanat, Trimethylhexandiisocyanat, Heptamethylendiisocyanat oder Diisocyanate, abgeleitet von Dimerfettsäuren, wie sie unter der Handelsbezeichnung DDI 1410 von der Firma Henkel verrieben und in den Patentschriften WO 97/49745 und WO 97/49747 beschrieben werden, insbesondere 2-Heptyl-3,4-bis(9-isocyanatononyl)-1-pentyl-cyclohexan, 1,2-, 1,4- oder 1,3-Bis(isocyanatomethyl)cyclohexan, 1,2-, 1,4- oder 1,3-Bis(2-isocyanatoeth-1-yl)cyclohexan, 1,3-Bis(3-isocyanatoprop-1-yl)cyclohexan oder 1,2-, 1,4- oder 1,3-Bis(4-isocyanatobut-1-yl)cyclohexan, m-Tetramethylxylylendiisocyananat (=1,3-Bis-(2-isocyanatoprop-2-yl)-benzol) oder Toluylendiisocyanat.

Ganz besonders bevorzugte Diisocyanate sind Hexamethylendiisocyanat und Isophorondiisocyanat.

Als unblockierte Polyisocyanate fungieren vorzugsweise Gemische aus Diisocyanaten sowie deren Oligo- und Polymeren. Insbesondere werden Hexamethlyendiisocyanat, Isophorndiisocyanat und deren Oligo- und Polymere als unblockierte Polyisocyanate eingesetzt.

Das Mengenverhältnis zwischen der Bindemittelkomponente und der Polyisocyanatkomponente wird so gewählt, dass die Anzahl der OH-Gruppen zu der Anzahl der reaktiven, unblockierten NCO-Gruppen im molaren Verhältnis von 1:0,5 bis 1:3, bevorzugt 1:1 bis 1:2 liegt.

Die erfindungsgemäß zu verwendende Zusammensetzung kann weitere, von unblockierten Polyisocyanaten verschiedene Härter enthalten. Auch oligomere Siloxane können als Härter enthalten sein. Bevorzugt ist jedoch, dass keine oligomeren Siloxane als Härter enthalten sind.

Die erfindungsgemäß zu verwendende Zusammensetzung enthält darüber hinaus 10 - 60 Massen-% Wasser, bezogen auf die Gesamtmasse der Zusammensetzung. Vorzugsweise enthält die erfindungsgemäß zu verwendende Zusammensetzung 20 - 40 Massen-%, besonders bevorzugt 30 - 40 Massen-%.

Als weitere Komponente kann die erfindungsgemäß zu verwendende Zusammensetzung mindestens ein organisches Lösemittel enthalten. Lösemittel im Rahmen dieser Erfindung meint organische Flüssigkeiten, die andere gasförmige, flüssige oder feste Stoffe zu lösen vermögen. Diese Lösemittel können inert gegenüber den übrigen Bestandteilen der zu verwendenden Zusammensetzung sein oder als Verdünnungsmittel, das bei der Filmbildung durch chemische Reaktion Bestandteil des Bindemittels wird, fungieren (sogenannte Reaktiwerdünner). Vorzugsweise werden gegenüber den anderen Zusammensetzungsbestandteilen inerte Lösemittel eingesetzt.

Beispiele geeigneter organischer Lösemittel sind aromatische, aliphatische oder cycloaliphatische Kohlenwasserstoffe sowie aliphatische Alkohole, aliphatische Ketone und aliphatische Amine.

Die erfindungsgemäß zu verwendende Zusammensetzung enthält 0 - 20 Massen-% organische Lösemittel, bezogen auf die Gesamtmasse der Zusammensetzung. Vorzugsweise enthält die Zusammensetzung 1-12 Massen-% organische Lösemittel, ganz besonders bevorzugt 2-10 Massen-%.

Des weitere kann die erfindungsgemäß zu verwendende Zusammensetzung zu den zuvor genannten Komponenten a bis g unterschiedliche Additive enthalten. Beispiele geeigneter Additive sind
- Dispergiermittel;
- Radikalfänger;
- organische Korrosionsinhibitoren;
- Katalysatoren für die Vernetzung wie anorganische und organische Salze und Komplexe des Zinns, Bleis, Antimons, Wismuts, Eisens oder Mangans, vorzugsweise organische Salze und Komplexe des Wismuts und des Zinns, insbesondere Wismutlactat, -ethylhexanoat oder -dimethylolpropionat, Dibutylzinnoxid oder Dibutylzinndilaurat;
- Slipadditive;
- Polymerisationsinhibitoren;
- Entschäumer;
- Emulgatoren, insbesondere nicht ionische Emulgatoren wie alkoxylierte Alkanole und Polyole, Phenole und Alkylphenole oder anionische Emulgatoren wie Alkalisalze oder Ammoniumsalze von Alkancarbonsäuren, Alkansulfonsäuren, und Sulfosäuren von alkoxylierten Alkanolen und Polyolen, Phenolen und Alkylphenole;
- Netzmittel;
- filmbildende Hilfsmittel wie Cellulose-Derivate;
- Flammschutzmittel;
- Antikratermittel;
- rheologiesteuernde Additive.

Weitere Beispiele geeigneter Lackadditive werden in dem Lehrbuch "Lackadditive" von Johan Bieleman, Wiley-VCH, Weinheim, New York, 1998, beschrieben.

Vorzugsweise enthält die erfindungsgemäß zu verwendende Zusammensetzung Dispergiermittel und Filmbildehilfsmittel.

Die erfindungsgemäß zu verwendende Zusammensetzung kann aus einem Modulsystem hergestellt werden, welches enthält
a. ein Bindemittel-Modul, enthaltend
   i. sämtliche Bindemittel und
   ii. Wasser und
b. ein Härter-Modul, enthaltend
   iii. sämtliche unblockierten Isocyanate,
   iv. ggf. sämtliche weiteren Härter und
   v. Wasser und/oder organische Lösemittel.

Die weiteren Bestandteile der erfindungsgemäß zu verwendenden Zusammensetzung können im Bindemittel-Modul, im Härter-Modul oder in beiden Modulen enthalten sein. Genauso gut können sich die weiteren Bestandteile auf weitere Module aufteilen. Die organischen Lösemittel können auch teilweise oder vollständig im Bindemittel-Modul enthalten sein.

Ein weiterer Gegenstand der Erfindung ist ein Verfahren zur Beschichtung von Faser-Kunststoff-Verbunden als Substrat für den Flugzeug- oder Raumfahrtbau. Dieses Verfahren wird so durchgeführt, dass auf das Substrat in der Reihenfolge aufgetragen wird
a. ggf. ein In-Mold-Primer,
b. mindestens eine erfindungsgemäß zu verwendende Zusammensetzung und
c. mindestens ein Decklack, der sich zusammensetzt aus
   i. mindestens einem Basislack und/oder
   ii. mindestens einem Klarlack,
wobei die erfindungsgemäß zu verwendende Zusammensetzung vollständig gehärtet und der Decklack anschließend aufgetragen und gehärtet wird oder der Decklack vor der vollständigen Härtung der erfindungsgemäß zu verwendenden Zusammensetzung aufgetragen und Schichten b und c gemeinsam vollständig gehärtet werden. Vorzugsweise wird die erfindungsgemäß zu verwendende Zusammensetzung zunächst vollständig gehärtet.

Das Substrat wird nicht, wie bei Aluminium-Substraten üblich, chemisch vorbehandelt. Es kann jedoch physikalisch vorbehandelt werden. Jedoch kann auf das Substrat ein In-Mold-Primer als erste Schicht aufgebracht werden, was bevorzugt ist. In-Mold-Primer dienen als Haftgrund für die weitere Lackierung und zur Egalisierung der zumeist rauen Oberfläche des Kompositsubstrate. Geeignete In-Mold-Primer können auf Epoxid- oder einer isocyanathärtbaren Poly(meth)acrylatBasis hergestellt werden.

Die Härtungstemperatur für die erfindungsgemäß zu verwendende Zusammensetzung ist so zu wählen, dass sich die Struktur und der Aufbau des Substrats nicht verändert bzw. diese nicht beschädigt werden. Auf Grund der Eigenschaften der Zusammensetzungen reicht bereits eine Härtungstemperatur von weniger als 40 °C aus.

Die erfindungsgemäß zu verwendende Zusammensetzung wird so aufgetragen, dass vorzugsweise eine Trockenschichtdicke von 40 bis 120 µm erhalten wird. Typischerweise liegt die Trockenschichtdicke bei 40 bis 80 µm, vorzugsweise bei 50 bis 70 µm. Die erfindungsgemäß zu verwendenden Zusammensetzungen können aber auch mit höheren Trockenschichtdicken von bis zu 100 oder 120 µm appliziert werden.

Der Decklack besteht aus mindestens einem Basislack, mindestens einem Klarlack oder mindestens einem Basislack und mindestens einem Klarlack. Besteht der Decklack aus sowohl Basis- als auch Klarlack, wird zunächst der Basislack, anschließend der Klarlack aufgetragen. Ein Mehrfachauftrag von Basis- und/oder Klarlack ist möglich. Vorzugsweise besteht der Decklack aus Basis- und Klarlack oder nur aus Klarlack. Bevorzugt besteht der Decklack aus Basis- und Klarlack. Besonders bevorzugt werden je eine Schicht Basis- und Klarlack aufgetragen. Wenn der Basislack jedoch festkörperreich ist, d. h. wenn ein Festkörpergehalt von 70 % und mehr erreicht wird (sogenannte High Solids), wird auf den Klarlack vorzugsweise verzichtet. Der Festkörpergehalt ist der Massenanteil, der bei 120 °C für 60 min beim Eindampfen als Rückstand verbleibt.

Als Basis- bzw. Klarlacke können übliche Basis- und Klarlacke eingesetzt werden, die zum überwiegenden Teil chemisch vernetzen. Bevorzugte Lacke härten bei unter 40 °C, besonders bevorzugt bei unter 35 °C, ganz besonders bevorzugt bei unter 30°C, insbesondere unter 25 °C. Üblicherweise werden Polyurethansysteme (Isocyanathärter plus OH-haltiges Bindemittel) eingesetzt.

Die Trockenschichtdicke der Decklackierung beträgt vorzugsweise 60 bis 100 µm.

Im Rahmen der Erfindung werden weiterhin beschichtete Faser-Kunststoff-Verbunde bereitgestellt, die nach dem zuvor genannten Beschichtungsverfahren erhalten werden.

Des weiteren werden Zusammensetzungen bereitgestellt, die unter 40 °C härten ("erfindungsgemäße Zusammensetzungen"). Diese enthalten die Komponenten:
a. 1 - 50 Massen% eines Bindemittelgemischs aus mindestens einem hydroxyfunktionellen Poly(meth)acrylat und mindestens einem weiteren hydroxyfunktionellen Bindemittel, ausgewählt aus Polyestern und Polyurethanen,
b.
   i. 0,01 - 25 Massen-% mindestens eines elektrisch leitfähigen Pigments, ausgewählt aus der Gruppe bestehend aus leitfähigen Rußen, Graphen, Fullerenen, kitfähigem Bariumsulfat, dotierten Perlglanzpigmenten und Metallpigmenten,
      oder
   ii. 0,001 - 5 Massen-% mindestens eines elektrish leitfähigen Pigments, ausgewählt aus Nanopartikeln und leitfähigen Polymeren,
c. 5 - 80 Massen-% mindestens eines nicht-leitfähigen Pigments,
d. 0,001 - 25 Massen-% mindestens einer Verbindung, die ausgewählt ist aus der Gruppe bestehend aus Polyethern, Oligoethern, Polysiloxanen und aliphatischen Ethinolen, als Verlaufsmittel,
e. 0,05 - 20 Massen-% mindestens eines unblockierten Isocyanats und
f. 10 - 60 Massen% Wasser,
g. 0 - 20 Massen-% organische Lösemittel,
wobei sich die Massen-%-Angaben auf die Gesamtmasse der Zusammensetzung beziehen.

Als Bindemittel können die bereits zuvor beschriebenen Bindemittel in den zuvor angegebenen Mengen eingesetzt werden.

Die zuvor gemachten Angaben zum erfindungsgemäß zu verwendenden Zusammensetzung lassen sich analog auf die erfindungsgemäße Zusammensetzung übertragen. So gelten Angaben zu Massenanteiten und Beispielen, insbesondere den bevorzugten Ausführungsformen, über die elektrisch leitfähigen Pigmente, die nicht-leitfähigen Pigmente, die als Verlaufmittel wirkenden Verbindungen, die ausgewählt sind aus der Gruppe bestehend aus Polyethern, Oligoethern, Polysiloxanen und aliphatischen Ethinolen, die unblockierten Isocyanate und weiteren Härter, das Wasser und die organischen Lösemittel analog auch für die erfindungsgemäßen Zusammensetzungen.

Die erfindungsgemäße Zusammensetzung kann ebenso die oben genannten weiteren Additive enthalten.

Die erfindungsgemäße Zusammensetzung härtet vorzugsweise bei Temperaturen unter 35 °C, bevorzugt unter 30 °C, ganz besonders bevorzugt unter 25 °C und insbesondere bei 18 bis 23 °C.

Weiterer Gegenstand der Erfindung ist ein Verfahren zur Herstellung der erfindungsgemäßen Zusammensetzung. Dieses zeichnet sich dadurch aus, dass
a. mindestens ein Bindemittel der erfindungsgemäßen Zusammensetzung, mindestens ein elektrisch leitfähiges Pigment und Wasser zu einer Paste vermischt und gemahlen werden, und
b. mit mindestens einem nicht-leitfähigen Pigment und mindestens einer Verbindung als Verlaufsmittel, die ausgewählt ist aus der Gruppe bestehend aus Polyethern, Oligoethern, Polysiloxanen und aliphatischen Ethinolen,
   zu einer Komponente **I** vermischt werden und anschließend
c. mit dem oder den unblockierten Polyisocyanat/en als Komponente **II**
vermischt werden.

Weiterer Gegenstand der Erfindung ist eine Lackierung oder Mehrschichtlackierung, die mindestens eine Lackschicht aus der erfindungsgemäßen Zusammensetzung enthält. Die Mehrschichtlackierung kann darüber hinaus mindestens einen zuvor beschriebenen In-Mold-Primer und/oder mindestens einen zuvor beschriebenen Decklack aufweisen. Die Auftragungs- und Härtungreihenfolge der Schichten erfolgt analog zu dem bereits beschriebenen Verfahren zur Beschichtung für die erfindungsgemäß zu verwendende Zusammensetzung. Die aus der erfindungsgemäßen Zusammensetzung erhaltene Lackschicht wird vorzugsweise so aufgetragen, dass eine Trockenschichtdicke von 40 bis 120 µm resultiert. Typischerweise beträgt die Trockenschichtdicke bei 40 bis 80 µm, vorzugsweise 50 bis 70 µm. Die erfindungsgemäß zu verwendenden Zusammensetzungen können aber auch so appliziert werden, dass höhere Trockenschichtdicken von bis zu 100 oder 120 µm erhalten werden.

Die Erfindung umfasst darüber hinaus Faser-Kunststoff-Verbunde, die mit der erfindungsgemäßen Zusammensetzung beschichtet sind.

Weiterer Bestandteil der Erfindung ist ein Modulsystem zur Herstellung der erfindungsgemäßen Zusammensetzungen. Dieses System enthält
a. ein Bindemittel-Modul, enthaltend
   i. sämtliche Bindemittel und
   ii. Wasser und
b. ein Härter-Modul, enthaltend
   i. sämtliche unblockierten Polyisocyanate,
   ii. ggf. sämtliche weiteren Härter und
   iii. Wasser und/oder organische Lösemittel.

Die weiteren Bestandteile der erfindungsgemäßen Zusammensetzung können im Bindemittel-Modul, im Härter-Modul oder in beiden Modulen enthalten sein. Genauso gut können sich die weiteren Bestandteile auf weitere Module aufteilen. Die organischen Lösemittel können auch teilweise oder vollständig im Bindemittel-Modul enthalten sein.

Ein bevorzugtes Modulsystem zur Herstellung erfindungsgemäßer Zusammensetzungen enthält
a. das Bindemittel-Modul enthaltend
   i. sämtliche Bindemittel,
   ii. mindestens ein elektrisch leitfähiges Pigment,
   iii. mindestens ein nicht-leitfähiges Pigment,
   iv. mindestens ein Verlaufmittel und
   v. Wasser
   und
b. das Härter-Modul enthaltend
   i. sämtliche unblockierten Polyisocyanate,
   ii. ggf. sämtliche weiteren Härter und
   iii. organische Lösemittel.

Im Folgenden wird die Erfindung unter Bezugnahme auf Beispiele weiter erläutert.

### Beispiele

### 1. Füller-Herstellung

### 1a. Paste

In einem geeigneten Rührgefäß wurden die in der folgenden Tabelle angegebenen Komponenten nacheinander unter Rühren langsam bei Raumtemperatur (21 °C) zugegeben und homogenisiert (ca. 1250-1500 U/min). Das Material wurde ca. 15 min bei 3000 U/min dissolvert. Anschließend wurde dieses Material mittels einer Perlmühle für ca. 2 Stunden bis zu einer Korngröße < 10 µm gemahlen.

| Teile (Masse) | Stoff |
|---|---|
| 18,56 | hydroxylgruppenhaltiges Bindemittel |
| 0,17 | handelsübliches Dispergiermittel für den wässrigen Bereich |
| 0,65 | handelsübliches leitfähiges Ruß |
| 3,98 | Wasser |

### 1b. Komplettierung

In einem geeigneten Rührgefäß wurden die Stoffe nach folgender Tabelle unter Rühren zusammengegeben und homogenisiert.

| Teile (Masse) | Funktion |
|---|---|
| 23,36 | Paste 1a |
| 66,90 | Rutil-Paste, angerieben mit einem hydroxylhaltigen Polyester und einem hydroxylhaltigen Polyurethan |
| 5,03 | organische Lösemittel |
| 0,57 | handelsübliches Dispergiermittel auf Polyether-Basis |
| 0,25 | handelsüblicher Entschäumer auf Polysiloxan-Basis |
| 0,98 | handelsübliches Dispergiermittel auf polyethermodifizierter Siloxan-Basis |
| 2,91 | Wasser |

Die Mischung 1 b. weist eine rechnerisch ermittelte OH-Zahl von 0,5 mg KOH/g auf.

### 1c. Härter

In einem geeigneten Rührgefäß wurden die in der folgenden Tabelle genannten Rohstoffe unter Rühren zusammengegeben und homogenisiert.

| Teile (Masse) | Rohstoff |
|---|---|
| 32,25 | IPDI-Polymer |
| 0,23 | IPDI |
| 0,1 | HDI |
| 32,4 | HDI-Polymer |
| 35 | organische Lösemittel |

### 2. Applikation

Der Lack nach Versuch 1 b wird in einem Massen-Verhältnis von 100:5 zum Härter 1 c gegeben, so dass sich ein Verhältnis von OH- zu NCO-Gruppen von 1:1,46 ergibt.
Mit einer Sprühpistole (Devilbiss GFG-Fließbecher-Spritzpistole) wurde der Füller mit einer Nassschichtdicke von 60 µm auf ein kohlenstofffaserverstärken Kohlenstoff, dessen Matrix Epoxid-Harze enthält, aufgebracht, die eine Trockenschichtdicke von 55 µm ergibt. Nach 4 Stunden bei 25°C wurde mittels eines Hochohm-Messgeräts (Kreisring-Elektroden, Faradaykäfig, Hochohm-Messgerät HM 307D der Firma Fetronic GmbH) ein Oberflächenwiderstand von 10⁶ Ohm gemessen.

## Patentansprüche

1. Verwendung einer unter 40 °C härtenden Zusammensetzung, enthaltend
a. 1 - 50 Massen-% mindestens eines hydroxyfunktionellen Bindemittels, ausgewählt aus der Gruppe bestehend aus Poly(meth)acrylaten, Polyestern und Polyurethanen,
b.
i. 0,01 - 25 Massen-% mindestens eines elektrisch leitfähigen Pigments, ausgewählt aus der Gruppe bestehend aus leitfähigen Rußen, Graphen, Fullerenen, leitfähigem Bariumsulfat, dotierten Perlglanzpigmenten und Metallpigmenten,
oder
ii. 0,001 - 5 Massen-% mindestens eines elektrisch leitfähigen Pigments, ausgewählt aus Nanopartikeln und leitfähigen Polymeren,
c. 5 - 80 Massen-% mindestens eines nicht-leitfähigen Pigments,
d. 0,001 - 25 Massen% mindestens einer Verbindung, die ausgewählt ist aus der Gruppe bestehend aus Polyethern, Oligoethern, Polysiloxanen und aliphatischen Ethinolen, als Verlaufsmittel,
e. 0,05 - 20 Massen-% mindestens eines unblockierten Polyisocyanats,
f. 10 - 60 Massen-% Wasser und
g. 0 - 20 Massen% organische Lösemittel,
wobei sich die Massen-%-Angaben auf die Gesamtmasse der Zusammensetzung beziehen, als Füller zur Beschichtung von Faser-Kunststoff-Verbunden.

2. Verwendung nach Anspruch 1, **dadurch gekennzeichnet, dass** der Füller zur Antistatikbeschichtung der Verbunde dient.

3. Verwendung nach einem der vorherigen Ansprüche, **dadurch gekennzeichnet, dass** die Beschichtung einen Oberflächenwiderstand von 10² bis 10⁸ Ohm aufweist.

4. Verwendung nach einem der vorherigen Ansprüche, **dadurch gekennzeichnet, dass** die Faser-Kunststoff-Verbunde im Flugzeug- und/oder Raumfahrtbau eingesetzt werden.

5. Verwendung nach einem der vorherigen Ansprüche, **dadurch gekennzeichnet, dass** weitere Bindemittel enthalten sind.

6. Verwendung nach einem der vorherigen Ansprüche, **dadurch gekennzeichnet, dass** das nicht-leitfähige Pigment ausgewählt ist aus der Gruppe bestehend aus Titandioxid, Kalk, Siliciumdioxid, Talkum und Kieselsäuren.

7. Verwendung nach einem der vorherigen Ansprüche, **dadurch gekennzeichnet, dass** mindestens ein Ruß als elektrisch leitfähiges Pigment und mindestens Titandioxid als nicht-leitfähiges Pigment enthalten ist.

8. Verwendung nach Anspruch 9, **dadurch gekennzeichnet, dass** der Ruß eine Korngröße von 20 µm oder weniger aufweist.

9. Verwendung nach einem der vorherigen Ansprüche, **dadurch gekennzeichnet, dass** das organische Lösemittel ausgewählt ist aus der Gruppe bestehend aus aromatischen Kohlenwasserstoffen, aliphatischen Kohlenwasserstoffen, cycloaliphatischen Kohlenwasserstoffen, aliphatischen Alkoholen, aliphatischen Ketonen und aliphatischen Aminen.

10. Verwendung nach einem der vorherigen Ansprüche, **dadurch gekennzeichnet, dass** die Zusammensetzung herstellbar ist aus einem Modulsystem, enthaltend
a. ein Bindemittel-Modul, enthaltend
i. sämtliche Bindemittel und
ii. Wasser und
b. ein Härter-Modul, enthaltend
i. sämtliche unblockierten Polyisocyanate,
ii. ggf. sämtliche weiteren Härter und
iii. Wasser und/oder organische Lösemittel.

11. Verfahren zur Beschichtung von Faser-Kunststoff-Verbunden für den Flugzeug- oder Raumfahrtbau, in der Reihenfolge umfassend
a. ggf. Aufbringen eines In-Mold-Primers,
b. Aufbringen mindestens einer Zusammensetzung nach einem der vorherigen Ansprüche,
c. mindestens ein Decklack, der sich zusammensetzt aus
i. mindestens einem Basislack und/oder
ii. mindestens einem Klarlack,
wobei die Zusammensetzung vollständig gehärtet und der Decklack anschließend aufgetragen und gehärtet wird
oder
der Decklack vor der vollständigen Härtung der Zusammensetzung aufgetragen und die Schichten b und c gemeinsam vollständig gehärtet werden.

12. Beschichtete Faser-Kunststoff-Verbunde, erhältlich nach dem Beschichtungsverfahren des Anspruchs 11.

13. Zusammensetzung, enthaltend
a. 1 - 50 Massen-% eines Bindemittelgemischs aus mindestens einem hydroxyfunktionellen Poly(meth)acrylat und mindestens einem weiteren hydroxyfunktionellen Bindemittel, ausgewählt aus Polyestern und Polyurethanen,
b.
i. 0,01 - 25 Massen-% mindestens eines elektrisch leitfähigen Pigments, ausgewählt aus der Gruppe bestehend aus leitfähigen Rußen, Graphen, Fullerenen, leitfähigem Bariumsulfat, dotierten Perlglanzpigmenten und Metallpigmenten,
oder
ii. 0,001 - 5 Massen-% mindestens eines elektrisch leitfähigen Pigments, ausgewählt aus Nanopartikeln und leitfähigen Polymeren,
c. 5 - 80 Massen-% mindestens eines nicht-leitfähigen Pigments,
d. 0,001 - 25 Massen-% mindestens einer Verbindung, die ausgewählt ist aus der Gruppe bestehend aus Polyethern, Oligoethern, Polysiloxanen und aliphatischen Ethinolen, als Verlaufmittel,
e. 0,05 - 20 Massen-% mindestens eines unblockierten Polyisocanats und
f. 10 - 60 Massen-% Wasser,
g. 0 - 20 Massen-% organische Lösemittel,
wobei sich die Massen-%-Angaben auf die Gesamtmasse der Zusammensetzung beziehen und die Zusammensetzung unter 40 °C härtet.

14. Zusammensetzung nach Anspruch 13, **dadurch gekennzeichnet, dass** der leitfähige Ruß eine Korngröße von 10 µm oder weniger aufweist.

15. Verfahren zur Herstellung einer Zusammensetzung nach Anspruch 13 oder 14, **dadurch gekennzeichnet, dass**
a. mindestens ein Bindemittel, mindestens ein elektrisch leitfähiges Pigment und Wasser zu einer Paste vermischt und zu gemahlen werden, und
b. mit mindestens einem nicht-leitfähigen Pigment und mindestens einer Verbindung als Verlaufmittel, die ausgewählt ist aus der Gruppe bestehend aus Polyethern, Oligoethern, Polysiloxanen und aliphatischen Ethinolen,
zu einer Komponente I vermischt werden und anschließend c. mit dem oder den unblockierten Polyisocanat/en als Komponente II
vermischt wird.

16. Lackierung oder Mehrschichtlackierung, enthaltend mindestens eine Beschichtung aus einer Zusammensetzung nach einem der Ansprüche 13 bis 14.

17. Lackierung oder Mehrschichtlackierung nach Anspruch 16, **dadurch gekennzeichnet, dass** die Beschichtung aus der Zusammensetzung eine Trockenschichtdicke von 40 bis 120 µm aufweist.

18. Beschichtete Faser-Kunststoff-Verbunde, beschichtet mit der Zusammensetzung nach Anspruch 13 oder 14.

19. Modulsystem für die Herstellung von Zusammensetzungen nach einem der Ansprüche 13 bis 14, mindestens enthaltend
a. ein Bindemittel-Modul, enthaltend
i. sämtliche Bindemittel und
ii. Wasser und
b. ein Härter-Modul, enthaltend
i. sämtliche unblockierten Polyisocyanate,
ii. ggf. von unblockierten Polyisocyanaten verschiedene Härter und
iii. Wasser und/oder organische Lösemittel.

20. Modulsystem nach Anspruch 19, **dadurch gekennzeichnet, dass**
a. das Bindemittel-Modul enthält
i. sämtliche Bindemittel,
ii. mindestens ein elektrisch leitfähiges Pigment,
iii. mindestens ein nicht-leitfähiges Pigment,
iv. mindestens ein Laufmittel und
v. Wasser
und
b. das Härter-Modul enthält
i. sämtliche unblockierten Polyisocyanate,
ii. ggf. sämtliche weiteren Härter und
iii. organische Lösemittel.

## Claims

1. Use of a composition curing below 40°C and comprising
a. 1% - 50% by mass of at least one hydroxy-functional binder selected from the group consisting of poly(meth)acrylates, polyesters, and polyurethanes,
b.
i. 0.01% - 25% by mass of at least one electrically conductive pigment selected from the group consisting of conductive carbon blacks, graphene, fullerenes, conductive barium sulfate, doped pearlescent pigments, and metal pigments,
or
ii. 0.001% - 5% by mass of at least one electrically conductive pigment selected from nanoparticles and conductive polymers,
c. 5% - 80% by mass of at least one nonconductive pigment,
d. 0.001% - 25% by mass of at least one compound selected from the group consisting of polyethers, oligoethers, polysiloxanes, and aliphatic ethynols, as flow control agent,
e. 0.05% - 20% by mass of at least one nonblocked polyisocyanate,
f. 10% - 60% by mass of water, and
g. 0% - 20% by mass of organic solvents,
the % by mass figures being based on the total mass of the composition, as a primer-surfacer for coating fiber/polymer composites.

2. Use according to Claim 1, **characterized in that** the primer-surfacer is employed for the antistatic coating of the composites.

3. Use according to either of the preceding claims, **characterized in that** the coating has a surface resistance of 10² to 10⁸ ohm.

4. Use according to any one of the preceding claims, **characterized in that** the fiber/polymer composites are used in aircraft and/or space-travel engineering.

5. Use according to any one of the preceding claims, **characterized in that** further binders are present.

6. Use according to any one of the preceding claims, **characterized in that** the nonconductive pigment is selected from the group consisting of titanium dioxide, lime, silicon dioxide, talc and silicas.

7. Use according to any one of the preceding claims, **characterized in that** at least one carbon black is included as electrically conductive pigment and at least titanium dioxide is included as nonconductive pigment.

8. Use according to Claim 7, **characterized in that** the carbon black has a particle size of 20 µm or less.

9. Use according to any one of the preceding claims, **characterized in that** the organic solvent is selected from the group consisting of aromatic hydrocarbons, aliphatic hydrocarbons, cycloaliphatic hydrocarbons, aliphatic alcohols, aliphatic ketones, and aliphatic amines.

10. Use according to any one of the preceding claims, **characterized in that** the composition is preparable from a modular system comprising
a. a binder module comprising
i. all the binders and
ii. water and
b. a curing agent module comprising
i. all the nonblocked polyisocyanates,
ii. where appropriate, all the further curing agents, and
iii. water and/or organic solvents.

11. Method of coating fiber/polymer composites for aircraft or space-travel engineering, comprising in this order
a. where appropriate, application of an in-mold primer,
b. application of at least one composition according to any one of the preceding claims,
c. at least one topcoat which is composed of
i. at least one basecoat and/or
ii. at least one clearcoat,
the composition being fully cured and the topcoat then being applied and cured
or
the topcoat being applied before the composition is fully cured, and the films b and c being jointly fully cured.

12. Coated fiber/polymer composite obtainable by the coating method of Claim 11.

13. Composition comprising
a. 1% - 50% by mass of a binder mixture comprising at least one hydroxy-functional poly(meth)acrylate and at least one further hydroxy-functional binder selected from polyesters and polyurethanes,
b.
i. 0.01% - 25% by mass of at least one electrically conductive pigment selected from the group consisting of conductive carbon blacks, graphene, fullerenes, conductive barium sulfate, doped pearlescent pigments, and metal pigments,
or
ii. 0.001% - 5% by mass of at least one electrically conductive pigment selected from nanoparticles and conductive polymers,
c.5% - 80% by mass of at least one nonconductive pigment,
d.0.001% - 25% by mass of at least one compound selected from the group consisting of polyethers, oligoethers, polysiloxanes, and aliphatic ethynols, as flow control agent,
e.0.05% - 20% by mass of at least one nonblocked polyisocyanate,
f. 10% - 60% by mass of water, and
g.0% - 20% by mass of organic solvents,
the % by mass figures being based on the total mass of the composition, and the composition curing below 40°C.

14. Composition according to Claim 13, **characterized in that** the conductive carbon black has a particle size of 10 µm or less.

15. Method of preparing a composition according to Claim 13 or 14, **characterized in that**
a. at least one binder, at least one electrically conductive pigment, and water are mixed and ground to a paste, and
b. the paste is mixed with at least one nonconductive pigment and at least one compound as flow control agent, selected from the group consisting of polyethers, oligoethers, polysiloxanes, and aliphatic ethynols,
to give a component I, and then said component I is mixed
c. with the nonblocked polyisocyanate(s) as component II.

16. Single-coat or multicoat paint system comprising at least one coating comprising a composition according to either of Claims 13 and 14.

17. Single-coat or multicoat paint system according to Claim 16, **characterized in that** the coating comprising the composition has a dry film thickness of 40 to 120 µm.

18. Coated fiber/polymer composite, coated with the composition according to Claim 13 or 14.

19. Modular system for preparing a composition according to either of Claims 13 and 14, at least comprising
a.a binder module comprising
i. all the binders and
ii.water and
b. a curing agent module comprising
i. all the nonblocked polyisocyanates,
ii. where appropriate, curing agents other than nonblocked polyisocyanates, and
iii. water and/or organic solvents.

20. Modular system according to Claim 19, **characterized in that**
a. the binder module comprises
i. all the binders,
ii. at least one electrically conductive pigment,
iii. at least one nonconductive pigment,
iv. at least one flow agent and
v. water
and
b. the curing agent module comprises
i. all the nonblocked polyisocyanates,
ii. where appropriate, all the further curing agents, and
iii. organic solvents.

## Revendications

1. Utilisation d'une composition durcissant en dessous de 40 °C, contenant :
a. 1 à 50 % en masse d'au moins un liant à fonction hydroxy, choisi dans le groupe constitué par les poly(méth)acrylates, les polyesters et les polyuréthanes,
b.
i. 0,01 à 25 % en masse d'au moins un pigment conducteur électrique, choisi dans le groupe constitué par les noirs de carbone conducteurs, le graphène, les fullerènes, le sulfate de baryum conducteur, les pigments nacrés dopés et les pigments métalliques,
ou
ii. 0,001 à 5 % en masse d'au moins un pigment conducteur électrique, choisi parmi les nanoparticules et les polymères conducteurs,
c. 5 à 80 % en masse d'au moins un pigment non conducteur,
d. 0,001 à 25 % en masse d'au moins un composé choisi dans le groupe constitué par les polyéthers, les oligoéthers, les polysiloxanes et les éthynols aliphatiques, en tant qu'agent d'écoulement,
e. 0,05 à 20 % en masse d'au moins un polyisocyanate non bloqué,
f. 10 à 60 % en masse d'eau et
g. 0 à 20 % en masse de solvants organiques,
les données de % en masse se rapportant à la masse totale de la composition, en tant que charge pour le revêtement de composites fibre-plastique.

2. Utilisation selon la revendication 1, **caractérisée en ce que** la charge sert au revêtement antistatique des composites.

3. Utilisation selon l'une quelconque des revendications précédentes, **caractérisée en ce que** le revêtement présente une résistance superficielle de 10² à 10⁸ Ohm.

4. Utilisation selon l'une quelconque des revendications précédentes, **caractérisée en ce que** les composites fibre-plastique sont utilisés dans la construction aéronautique et/ou aérospatiale.

5. Utilisation selon l'une quelconque des revendications précédentes, **caractérisée en ce que** des liants supplémentaires sont contenus.

6. Utilisation selon l'une quelconque des revendications précédentes, **caractérisée en ce que** le pigment non conducteur est choisi dans le groupe constitué par le dioxyde de titane, la chaux, le dioxyde de silicium, le talc et les silices.

7. Utilisation selon l'une quelconque des revendications précédentes, **caractérisée en ce qu'**au moins un noir de carbone est contenu en tant que pigment conducteur électrique et au moins du dioxyde de titane en tant que pigment non conducteur.

8. Utilisation selon la revendication 7, **caractérisée en ce que** le noir de carbone présente une taille de grain de 20 µm ou moins.

9. Utilisation selon l'une quelconque des revendications précédentes, **caractérisée en ce que** le solvant organique est choisi dans le groupe constitué par les hydrocarbures aromatiques, les hydrocarbures aliphatiques, les hydrocarbures cycloaliphatiques, les alcools aliphatiques, les cétones aliphatiques et les amines aliphatiques.

10. Utilisation selon l'une quelconque des revendications précédentes, **caractérisée en ce que** la composition peut être fabriquée à partir d'un système modulaire, contenant :
a. un module liant, contenant :
i. tous les liants et
ii. de l'eau, et
b. un module durcisseur, contenant :
i. tous les polyisocyanates non bloqués,
ii. éventuellement tous les autres durcisseurs et
iii. de l'eau et/ou des solvants organiques.

11. Procédé de revêtement de composites fibre-plastique pour la construction aéronautique ou aérospatiale, comprenant dans l'ordre :
a. éventuellement l'application d'une amorce dans le moule,
b. l'application d'au moins une composition selon l'une quelconque des revendications précédentes,
c. au moins une laque de finition, composée par :
i. au moins une laque de base et/ou
ii. au moins une laque transparente,
la composition étant entièrement durcie et la laque de finition étant ensuite appliquée et durcie
ou
la laque de finition étant appliquée avant le durcissement complet de la composition et les couches b et c étant entièrement durcies ensemble.

12. Composites fibre-plastique revêtus, pouvant être obtenus par le procédé de revêtement selon la revendication 11.

13. Composition, contenant :
a. 1 à 50 % en masse d'un mélange de liants constitué d'au moins un poly(méth)acrylate à fonction hydroxy et d'au moins un autre liant à fonction hydroxy, choisi parmi les polyesters et les polyuréthanes,
b.
i. 0,01 à 25 % en masse d'au moins un pigment conducteur électrique, choisi dans le groupe constitué par les noirs de carbone conducteurs, le graphène, les fullerènes, le sulfate de baryum conducteur, les pigments nacrés dopés et les pigments métalliques,
ou
ii. 0,001 à 5 % en masse d'au moins un pigment conducteur électrique, choisi parmi les nanoparticules et les polymères conducteurs,
c. 5 à 80 % en masse d'au moins un pigment non conducteur,
d. 0,001 à 25 % en masse d'au moins un composé choisi dans le groupe constitué par les polyéthers, les oligoéthers, les polysiloxanes et les éthynols aliphatiques, en tant qu'agent d'écoulement,
e. 0,05 à 20 % en masse d'au moins un polyisocyanate non bloqué et
f. 10 à 60 % en masse d'eau,
g. 0 à 20 % en masse de solvants organiques,
les données de % en masse se rapportant à la masse totale de la composition et la composition durcissant en dessous de 40 °C.

14. Composition selon la revendication 13, **caractérisée en ce que** le noir de carbone conducteur présente une taille de grain de 10 µm ou moins.

15. Procédé de fabrication d'une composition selon la revendication 13 ou 14, **caractérisé en ce que**
a. au moins un liant, au moins un pigment conducteur électrique et de l'eau sont mélangés en une pâte et broyés, et sont mélangés
b. avec au moins un pigment non conducteur et au moins un composé en tant qu'agent d'écoulement, choisi dans le groupe constitué par les polyéthers, les oligoéthers, les polysiloxanes et les éthynols aliphatiques,
en un composant I, qui est ensuite mélangé c. avec le ou les polyisocyanates non bloqués en tant que composant II.

16. Laquage ou laquage multicouche, contenant au moins un revêtement en une composition selon l'une quelconque des revendications 13 à 14.

17. Laquage ou laquage multicouche selon la revendication 16, **caractérisé en ce que** le revêtement en la composition présente une épaisseur de couche sèche de 40 à 120 µm.

18. Composites fibre-plastique revêtus, revêtus avec la composition selon la revendication 13 ou 14.

19. Système modulaire pour la fabrication de compositions selon l'une quelconque des revendications 13 à 14, contenant au moins :
a. un module liant, contenant :
i. tous les liants et
ii. de l'eau et
b. un module durcisseur, contenant :
i. tous les polyisocyanates non bloqués,
ii. éventuellement des durcisseurs différents des polyisocyanates non bloqués et
iii. de l'eau et/ou des solvants organiques.

20. Système modulaire selon la revendication 19, **caractérisé en ce que**
a. le module liant contient :
i. tous les liants,
ii. au moins un pigment conducteur électrique,
iii. au moins un pigment non conducteur,
iv. au moins un agent d'écoulement et
v. de l'eau
et
b. le module durcisseur contient :
i. tous les polyisocyanates non bloqués,
ii. éventuellement tous les autres durcisseurs et
iii. des solvants organiques.
